(19) **Europäisches Patentamt**
**European Patent Office**
**Office européen des brevets**

(11) **EP 3 149 298 B1**

(12) **EUROPÄISCHE PATENTSCHRIFT**

(45) Veröffentlichungstag und Bekanntmachung des Hinweises auf die Patenterteilung:
**04.07.2018 Patentblatt 2018/27**

(51) Int Cl.:
*F01N 3/04* *(2006.01)*       *F01N 3/20* *(2006.01)*
*F01N 3/029* *(2006.01)*       *B01D 53/14* *(2006.01)*

(21) Anmeldenummer: **15723650.6**

(86) Internationale Anmeldenummer:
**PCT/EP2015/001037**

(22) Anmeldetag: **21.05.2015**

(87) Internationale Veröffentlichungsnummer:
**WO 2015/180831 (03.12.2015 Gazette 2015/48)**

(54) **ABGASNACHBEHANDLUNGSSYSTEM UND VERFAHREN ZUR ABGASNACHBEHANDLUNG**

EXHAUST GAS POST TREATMENT SYSTEM AND METHOD FOR EXHAUST GAS POST-TREATMENT

SYSTÈME DE POST-TRAITEMENT DES GAZ D'ÉCHAPPEMENT ET PROCÉDÉ DE POST-TRAITEMENT DES GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2014 DE 102014007913**

(43) Veröffentlichungstag der Anmeldung:
**05.04.2017 Patentblatt 2017/14**

(73) Patentinhaber: **MAN Diesel & Turbo SE**
**86153 Augsburg (DE)**

(72) Erfinder: **DÖRING, Andreas**
**82008 München/Unterhaching (DE)**

(56) Entgegenhaltungen:
**WO-A1-92/08541       WO-A1-2010/020684**
**WO-A1-2012/130375    WO-A2-2013/121081**
**CN-A- 102 364 068    DE-A1-102013 012 399**

**Beschreibung**

Die Erfindung betrifft ein Abgasnachbehandlungssystem für eine Brennkraftmaschine, insbesondere für eine mit Schweröl betriebene Schiffsdieselbrennkraftmaschine, nach dem Oberbegriff des Anspruchs 1. Ein solches System ist z.B. in den Dokumenten WO2012/130375, WO2010/020684 oder WO2013/121081 beschrieben.

Bei mit Schweröl betriebenen Brennkraftmaschinen besteht die Besonderheit, dass der verwendete Kraftstoff, also das Schweröl, einen hohen Schwefelgehalt aufweist. Schwefeloxide können mit anderen Bestandteilen des Abgases reagieren und zu Ablagerungen führen, welche die Effektivität der Abgasreinigung beeinträchtigen. Dies ist von Nachteil. Es besteht Bedarf an einem Abgasnachbehandlungssystem für eine Brennkraftmaschine, welches auch bei mit Schweröl betriebenen Brennkraftmaschinen eine effektive Abgasreinigung ermöglicht.

Aus der DE 10 2004 027 593 A1 ist eine Brennkraftmaschine mit einer Abgasturboaufladung und einer Abgasreinigung bekannt. Die Abgasturboaufladung ist entweder als einstufige oder als zweistufige Abgasturboaufladung mit einem Abgasturbolader oder mit zwei Abgasturboladern ausgeführt. Die Abgasreinigung umfasst einen SCR-Katalysator, der bei der einstufigen Abgasturboaufladung entweder, in Strömungsrichtung des Abgases gesehen, stromabwärts der Turbine des Abgasturboladers oder stromaufwärts der Turbine des Abgasturboladers positioniert ist. Bei einer zweistufigen Abgasturboaufladung mit einem HochdruckAbgasturbolader und einem Niederdruck-Abgasturbolader ist der SCR-Katalysator zwischen der Hochdruckturbine des Hochdruck-Abgasturboladers und der Niederdruckturbine des Niederdruck-Abgasturboladers positioniert.

Ein SCR-Katalysator eines Abgasnachbehandlungssystems nutzt zur Entstickung des Abgases als Reduktionsmittel Ammoniak. Bei aus dem Stand der Technik bekannten Abgasnachbehandlungssystemen wird in das Abgas stromaufwärts des SCR-Katalysators entweder unmittelbar Ammoniak oder eine Ammoniakvorläufersubstanz, wie z. B. eine wässrige Harnstofflösung, eingebracht, die im Abgasstrom zu Wasserdampf, Kohlendioxid und Ammoniak zersetzt bzw. verdampft wird. Dabei wird nach der Praxis die Menge des in das Abgas stromaufwärts des SCR-Katalysators eingebrachten Ammoniaks oder der Ammoniakvorläufersubstanz so eingestellt, dass diese Menge der im SCR-Katalysator umsetzbaren Ammoniakmenge entspricht, sodass stromabwärts des SCR-Katalysators kein Ammoniak im Abgas enthalten ist, um so unerwünschte Ammoniakemissionen zu vermeiden.

Obwohl es mit Hilfe eines SCR-Katalysators möglich ist, Stickoxide im Abgas, insbesondere Stickstoffmonoxid und Stickstoffdioxid, zu reduzieren, besteht insbesondere für mit Schweröl betriebene Brennkraftmaschinen ein Bedarf daran, neben Stickoxiden auch Schwefeloxide im Abgas zu reduzieren, um Schwefeloxidemissionen solcher Brennkraftmaschinen zu verringern.

Hiervon ausgehend liegt der Erfindung die Aufgabe zu Grunde, ein neuartiges Abgasnachbehandlungssystem für eine Brennkraftmaschine und ein Verfahren zur Abgasnachbehandlung zu schaffen. Diese Aufgabe wird durch ein Abgasnachbehandlungssystem für eine Brennkraftmaschine gemäß Anspruch 1 gelöst. Erfindungsgemäß ist stromabwärts des SCR-Katalysators ein Abgaswäscher positioniert, über welchen Ammoniak, welches in dem den SCR-Katalysator verlassenden Abgas enthalten ist, zusammen mit Schwefeloxiden, welche ebenfalls in dem den SCR-Katalysator verlassenden Abgas enthalten sind, unter Bildung von Ammoniumsalzen aus dem Abgas auswaschbar ist.

Im Sinne der hier vorliegenden Erfindung ist demnach stromabwärts des SCR-Katalysators ein Abgaswäscher positioniert. Hierbei ist stromabwärts des SCR-Katalysators im Abgas eine definierte Menge an Ammoniak enthalten, welches zusammen mit Schwefeloxiden im Bereich des Abgaswäschers aus dem Abgas ausgewaschen werden kann, nämlich unter Bildung von Ammoniumsalzen. Es liegt demnach im Sinne der hier vorliegenden Erfindung, stromaufwärts des SCR-Katalysators eine erhöhte Menge an Ammoniak oder eine erhöhte Menge einer Ammoniakvorläufersubstanz in das Abgas einzubringen, sodass stromabwärts des SCR-Katalysators eine definierte Ammoniakmenge im Abgas enthalten ist, die im Abgaswäscher genutzt werden kann, um unter Bildung von Ammoniumsalzen Schwefeloxide aus dem Abgas auszuwaschen. Hierdurch kann mit einfachen Mitteln neben der Entstickung auch eine Entschwefelung des Abgases bereitgestellt werden, wobei zur Entschwefelung ebenso wie zur Entstickung Ammoniak genutzt wird. Dies erlaubt eine besonders effektive Entstickung und Entschwefelung des Abgases, zumal durch die erhöhte Ammoniakmenge im SCR-Katalysator bei der Entstickung höhere Umsätze erzielt werden können.

Vorzugsweise bringt die stromaufwärts des SCR-Katalysators positionierte Einrichtung das Ammoniak und/oder die Ammoniakvorläufersubstanz in einer Menge in das Abgas ein, die größer die im SCR-Katalysator umsetzbare Ammoniakmenge ist, sodass stromabwärts des SCR-Katalysators Ammoniak in einer Menge enthalten ist, dass ein pH-Wert des die Ammoniumsalze enthaltenden Abwassers des Abgaswäschers zwischen 4 und 8 liegt. Hiermit ist eine besonders vorteilhafte Entstickung und Entschwefelung des Abgases möglich.

Die WO 2012/130375 A1 zeigt bereits ein Abgasnachbehandlungssystem mit einem SCR-Katalysator, welcher ebenfalls zur Entstickung des Abgases als Reduktionsmittel Ammoniak nutzt.

Beim neuen Abgasnachbehandlungssystem ist erfindungsgemäß ein Bypass vorgesehen, über welchen ein Abgasteilstrom stromabwärts der Einrichtung, die dem Einbringen des Ammoniaks und/oder der Ammoniakvorläufersubstanz in das Abgas dient, und stromaufwärts des SCR-Katalysators vom Abgas unter Ausbildung eines Abgashauptstroms, der über den SCR-Katalysator führbar ist, abzweigbar und abschließend stromabwärts des-SCR-Katalysators und stromaufwärts des Abgaswäschers dem über den SCR-Katalysator geführten Abgas zuführbar ist.

Oder als zweite Möglichkeit der Erfindung ist ein Bypass vorgesehen, über welchen ein Abgasteilstrom stromaufwärts der Einrichtung, die dem Einbringen des Ammoniaks und/oder der Ammoniakvorläufersubstanz in das Abgas dient, und stromaufwärts des SCR-Katalysators vom Abgas unter Ausbildung eines Abgashauptstroms, der über den SCR-Katalysator führbar ist, abzweigbar ist, wobei die Einrichtung, die dem Einbringen des Ammoniaks und/oder der Ammoniakvorläufersubstanz in das Abgas dient, dem Bypass zugeordnet ist und des Ammoniak und/oder die Ammoniakvorläufersubstanz in den Abgasteilstrom einbringt, und wobei ein erster Teil des Abgasteilstroms stromaufwärts des SCR-Katalysators dem Abgashauptstrom und ein zweiter Teil des Abgasteilstroms stromabwärts des SCR-Katalysators und stromaufwärts des Abgaswäschers dem über den SCR-Katalysator geführten Abgas zuführbar ist.

Mit beiden Ausbildungen der Erfindung ist es möglich, die Entstickung und Entschwefelung in gewissem Umfang unabhängig voneinander einzustellen bzw. zu steuern. Hiermit kann letztendlich die Entstickung und Entschwefelung des Abgases weiter verbessert werden.

Vorzugsweise ist sowohl bei der ersten als auch bei der zweiten Möglichkeit der Erfindung in dem Bypass ein SCR-Katalysator angeordnet, über welchen der stromabwärts des SCR-Katalysators und stromaufwärts des Abgaswäschers dem Abgas zugeführte Abgasteilstrom oder Teil desselben leitbar ist. Hiermit kann die Entstickung

weiter verbessert werden, bzw. die NOx-Umsätze am SCR-Katalysator unabhängig vom pH-Wert des Wäschers eingestellt werden.

Das erfindungsgemäße Verfahren zur Abgasnachbehandlung ist in Anspruch 8 definiert.

Das Abgas wird stromabwärts des SCR-Katalysators über einen Abgaswäscher geführt, über welchen Ammoniak, welches in dem den SCR-Katalysator verlassenden Abgas enthalten ist, zusammen mit Schwefeloxiden, welche ebenfalls in dem den SCR-Katalysator verlassenden Abgas enthalten sind, unter Bildung von Ammoniumsalzen aus dem Abgas ausgewaschen wird. Das erfindungsgemäße Verfahren erlaubt eine besonders vorteilhafte Entstickung und Entschwefelung von Abgas jeweils unter Nutzung von Ammoniak.

Nach einer vorteilhaften Weiterbildung werden über einen Eintrittsquerschnitt des SCR-Katalysators unterschiedliche Ammoniakkonzentrationen eingestellt, sodass vorzugweise ein Gleichverteilungsindex des Ammoniaks stromabwärts des SCR-Katalysators unter 0,8 liegt. Hiermit kann die Entschwefelung im Abgaswäscher ebenso wie die Entstickung im SCR-Katalysator weiter verbessert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

Fig. 1    eine schematisierte Darstellung eines ersten erfindungsgemäßen Abgasnachbehandlungssystems für eine Brennkraftmaschine;

Fig. 2    eine schematisierte Darstellung eines zweiten erfindungsgemäßen Abgasnachbehandlungssystems für eine Brennkraftmaschine;

Fig. 3    eine schematisierte Darstellung eines dritten erfindungsgemäßen Abgasnachbehandlungssystems für eine Brennkraftmaschine;

Fig. 4    eine schematisierte Darstellung eines vierten erfindungsgemäßen Abgasnachbehandlungssystems für eine Brennkraftmaschine;

Fig. 5    eine schematisierte Darstellung eines fünften erfindungsgemäßen Abgasnachbehandlungssystems für eine Brennkraftmaschine;

Fig. 6    eine schematisierte Darstellung eines sechsten erfindungsgemäßen Abgasnachbehandlungssystems für eine Brennkraftmaschine;

Fig. 7    eine schematisierte Darstellung eines siebten erfindungsgemäßen Abgasnachbehandlungssystems für eine Brennkraftmaschine;

Fig. 8    eine schematisierte Darstellung eines achten erfindungsgemäßen Abgasnachbehandlungssystems für eine Brennkraftmaschine; und

Fig. 9    eine schematisierte Darstellung eines weiteren erfindungsgemäßen Abgasnachbehandlungssystems für eine Brennkraftmaschine.

Die hier vorliegende Erfindung betrifft ein Abgasnachbehandlungssystem für eine Brennkraftmaschine, insbesondere für eine mit Schweröl betriebene Schiffsdieselbrennkraftmaschine. Weiterhin betrifft die Erfindung ein Verfahren zur Abgasnachbehandlung an einer solchen Brennkraftmaschine.

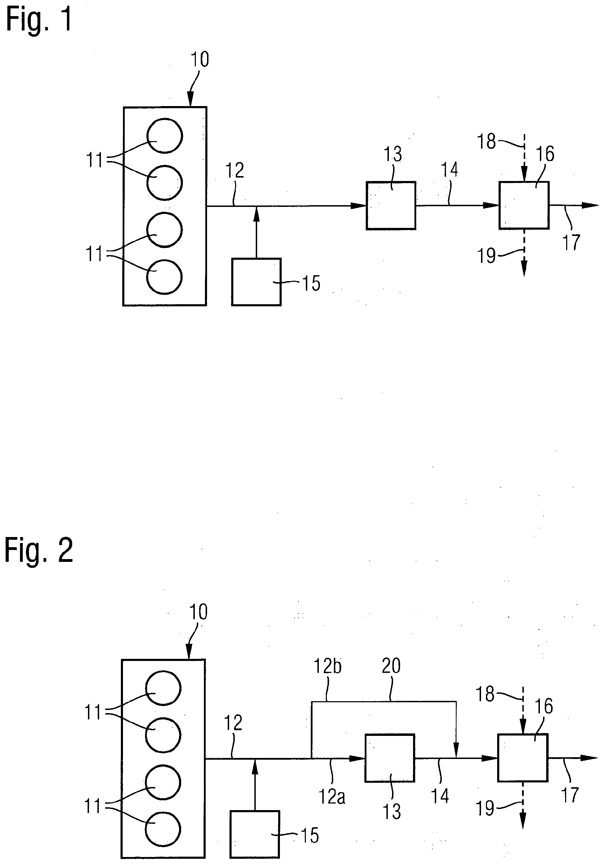

Fig. 1 zeigt stark schematisiert eine Brennkraftmaschine 10 mit mehreren Zylindern 11, wobei Abgas 12, welches die Brennkraftmaschine 10 verlässt, über ein der Brennkraftmaschine 10 nachgelagertes Abgasnachbehandlungssystem geführt wird, welches einen SCR-Katalysator 13 umfasst. Dass die Brennkraftmaschine 10 verlassende Abgas 12 wird demnach als ungereinigtes Abgas 12 dem SCR-Katalysator 13 zugeführt und verlässt den SCR-Katalysator 13 als zumindest teilweise gereinigtes Abgas 14. Im SCR-Katalysator 13 wird ein Reduktionsmittel zur Abgasreinigung, nämlich zur Entstickung des Abgases 12, benötigt, wobei als Reduktionsmittel Ammoniak genutzt wird. Ebenfalls einsetzbar sind die NH3-Vorläufersubstanzen Harnstoff, Carbamid, Guanidium=formiat.

Das zur Abgasreinigung im SCR-Katalysator 13 benötigte Ammoniak ist dem ungereinigten Abgas 12 stromaufwärts des SCR-Katalysators 13 mit Hilfe einer Einrichtung 15 zudosierbar, nämlich entweder unmittelbar als Ammoniak oder als Ammoniakvorläufersubstanz, die dann im Abgas zu Ammoniak umgesetzt wird.

Dann, wenn dem die Brennkraftmaschine 10 verlassenden Abgas 12 Ammoniak zugesetzt wird, handelt es sich bei der Einrichtung 15 um einen Ammoniakgenerator.

Dann, wenn dem Abgas 12 einen Ammoniakvorläufersubstanz zudosiert wird, handelt es sich bei der Einrichtung 15 vorzugsweise um eine Düse, mit Hilfe derer als Ammoniakvorläufersubstanz insbesondere Harnstoff in das Abgas 12 eingedüst wird. Der Harnstoff wird dann im Abgas 12 stromaufwärts des SCR-Katalysators 13 zu Wasserdampf, Kohlendioxid und Ammoniak verdampft.

Im SCR-Katalysator 13 erfolgt unter Verwendung des Ammoniaks eine Entstickung des die Brennkraftmaschine 10 verlassenden Abgases 12, sodass demnach im Abgas 14 stromabwärts des SCR-Katalysators 13 Stickoxide aus dem Abgas entfernt sind.

Erfindungsgemäß ist stromabwärts des SCR-Katalysators 13 ein Abgaswäscher 16 positioniert. Über den Abgaswäscher 16 ist Ammoniak, welches in dem den SCR-Katalysator 13 verlassenden Abgas 14 enthalten ist, zusammen mit Schwefeloxiden, die ebenfalls in dem den SCR-Katalysator 13 verlassenden Abgas 14 enthalten sind, unter Bildung von Ammoniumsalzen aus dem Abgas auswaschbar. Stromabwärts des Abgaswäschers 16 liegt demnach Abgas 17 vor, welches sowohl einer Entstickung als auch einer Entschwefelung unterzogen wurde, aus welchem demnach Schwefeloxide und Stickoxide entfernt wurden.

Dem Abgaswäscher 16 wird demnach das den SCR-Katalysator 13 verlassende Abgas 14 sowie andererseits als sogenanntes Waschmittel 18 vorzugsweise Wasser zugeführt, wobei den Abgaswäscher einerseits das entschwefelte Abgas 17 und andererseits mit Ammoniumsalzen angereichertes Abwasser 19 verlässt.

Es liegt demnach im Sinne der hier vorliegenden Erfindung, die stromaufwärts des SCR-Katalysators 13 positionierte Einrichtung 15 derart zu nutzen, dass über dieselbe Ammoniak und/oder eine Ammoniakvorläufersubstanz in einer Menge in das Abgas eingebracht wird, die größer als die im SCR-Katalysator 13 umsetzbare Ammoniakmenge ist. Demnach liegt stromabwärts des SCR-Katalysators 13 im Abgas 14 Ammoniak in einer Menge vor, die im Abgaswäscher 16 genutzt werden kann, um zur Entschwefelung des Abgases 14 aus demselben Schwefeloxide unter Bildung von Ammoniumsalzen auszuwaschen.

Dabei bringt die stromaufwärts des SCR-Katalysators 13 positionierte Einrichtung 15 das Ammoniak und/oder die Ammoniakvorläufersubstanz in einer Menge in das Abgas 12 ein, sodass stromabwärts des SCR-Katalysators 13 im Abgas 14 Ammoniak in einer Menge enthalten ist, sodass der pH-Wert des Abwassers 19 des Abgaswäschers 16 zwischen 4 und 8, bevorzugt zwischen 5 und 7, besonders bevorzugt zwischen 5,5 und 6,5, liegt. Dies kann über einen Regelkreis etabliert, in welchem der pH-Wert des Abwassers 19 gemessen, mit einem Sollwert verglichen und abhängig hiervon die Einrichtung 15 unter Anpassung der von derselben ins Abgas eingebrachten Menge an Ammoniak und/oder der Ammoniakvorläufersubstanz so angesteuert wird, sodass sich der gemessene pH-Wert dem Sollwert desselben annähert.

Mit der Erfindung ist eine effektive Entschwefelung und Entstickung von Abgas, insbesondere für eine mit Schweröl betriebene Schiffsdieselbrennkraftmaschine möglich, wobei sowohl zur Entstickung als auch zur Entschwefelung als Betriebsstoff jeweils Ammoniak genutzt wird. Durch die erhöhte Menge des zur Entstickung im Bereich des SCR-Katalysators 13 zur Verfügung stehenden Ammoniaks ist im Bereich des SCR-Katalysators 13 eine besonders effektive Entstickung des Abgases möglich. Das stromabwärts des SCR-Katalysators 13 im Abgas 14 enthaltene Ammoniak wird im Bereich des Abgaswäschers 16 zur Entschwefelung des Abgases genutzt.

Fig. 2 zeigt eine Weiterbildung des Ausführungsbeispiels der Fig. 1, wobei sich das Ausführungsbeispiel der Fig. 2 vom Ausführungsbeispiel der Fig. 1 lediglich dadurch unterscheidet, dass das Abgasnachbehandlungssystem der Fig. 2 einen Bypass 20 aufweist. Über den Bypass 20 ist stromaufwärts des SCR-Katalysators 13 und stromabwärts der Einrichtung 15, die dem Einbringen des Ammoniaks und/oder der Ammoniakvorläufersubstanz in das Abgas 12 dient, vom Abgas 12 unter Ausbildung eines Abgashauptstroms 12a und eines Abgasteilstroms 12b Abgas abzweigbar, wobei der Abgashauptstrom 12a über den SCR-Katalysator 14 geführt wird, und wobei der Abgasteilstrom 12b über den Bypass 20 am SCR-Katalysator 13 vorbeigeführt wird.

Stromabwärts des SCR-Katalysators 13 ist der an demselben vorbeigeführte Abgasteilstrom 12b mit dem den SCR-Katalysator 13 verlassenden Abgasstrom 14 vereinigbar, um dann gemeinsam über den Abgaswäscher 16 geführt zu werden. Hiermit können die Entstickung im SCR-Katalysator 13 und die Entschwefelung im Abgaswäscher 14 in gewissem Umfang unabhängig voneinander eingestellt bzw. gesteuert werden.

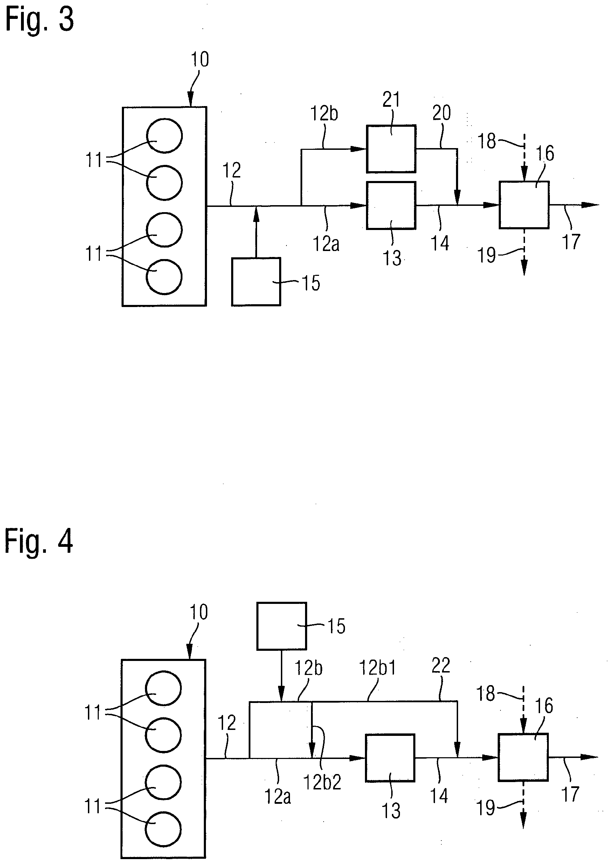

Fig. 3 zeigt eine Weiterbildung des Ausführungsbeispiels der Fig. 2, in welcher im Bypass 20 ein weiterer SCR-Katalysator 21 positioniert ist, um auch den Abgasteilstrom 12b stromaufwärts des Abgaswäschers 16 zur Entstickung über einen eigenen SCR-Katalysator 21 zu führen. Hiermit kann die Entstickung des Abgases verbessert werden.

Eine weitere Variante der Erfindung zeigt Fig. 4, wobei auch im Ausführungsbeispiel der Fig. 4 das Abgasnachbehandlungssystem einen Bypass 22 umfasst. Im Ausführungsbeispiel der Fig. 4 ist über den Bypass 22 das Abgas 12 wiederum in einem Abgashauptstrom 12a und einen Abgasteilstrom 12b aufteilbar, wobei der Abgashauptstrom 12a zwingend über den SCR-Katalysator 13 geführt wird.

Im Unterschied zu den Ausführungsbeispielen der Fig. 2 und 3 ist jedoch im Ausführungsbeispiel der Fig. 4 vorgesehen, dass die Einrichtung 15, die dem Einbringen des Ammoniaks und/oder der Ammoniakvorläufersubstanz in das Abgas dient, dem Bypass 22 zugeordnet ist, sodass demnach der Bypass 22 das Abgas stromaufwärts der Einrichtung 15 in den Abgashauptstrom 12a und den Abgasteilstrom 12b aufteilt. Die Einrichtung 15 bringt das Ammoniak und/oder die Ammoniakvorläufersubstanz in den Abgasteilstrom 12b ein, wobei der Abgasteilstrom 12b stromabwärts der Einrichtung 15 in zwei Teile 12b1 und 12b2 aufgeteilt wird.

Der Teil 12b1 des Abgasteilstroms 12b wird am SCR-Katalysator 13 vorbeigeführt und stromabwärts desselben sowie stromaufwärts des Abgaswäschers 16 mit dem Abgas 14, welches den SCR-Katalysator 13 verlässt, gemischt.

Der Teil 12b2 des Abgasteilstroms 12b wird stromaufwärts des SCR-Katalysators 13 mit dem Abgashauptstrom 12a gemischt, und zusammen mit demselben über den SCR-Katalysator 13 geführt.

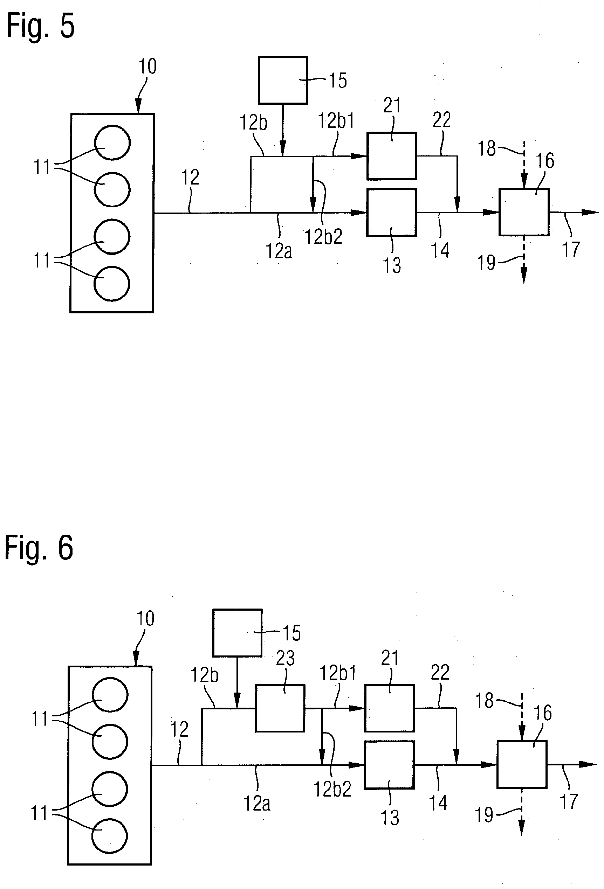

Fig. 5 zeigt eine Weiterbildung des Ausführungsbeispiels der Fig. 4, in welchem in Übereinstimmung zum Ausführungsbeispiel der Fig. 3 auch dem Bypass 22 ein weiterer SCR-Katalysator 21 zugeführt ist, über welchen im Ausführungsbeispiel der Fig. 5 der Teil 12b1 des Abgasteilstroms 12b geführt wird.

Fig. 6 zeigt eine Weiterbildung des Ausführungsbeispiels der Fig. 5, in welchem dem Bypass 22 stromabwärts der Einrichtung 15, die im Ausführungsbeispiel der Fig. 6 dem Zudosieren einer Ammoniakvorläufersubstanz in den Abgasteilstrom 12b dient, ein Hydrolysekatalysator 23 zugeordnet ist. Über den Hydrolysekatalysator 23 kann die Umsetzung der Ammoniakvorläufersubstanz in Ammoniak im Abgasteilstrom 12b verbessert bzw. unterstützt werden. Die Aufteilung des Abgasteilstroms 12b in die beiden Teile 12b1 und 12b2 erfolgt stromabwärts des Hydrolysekatalysators 23.

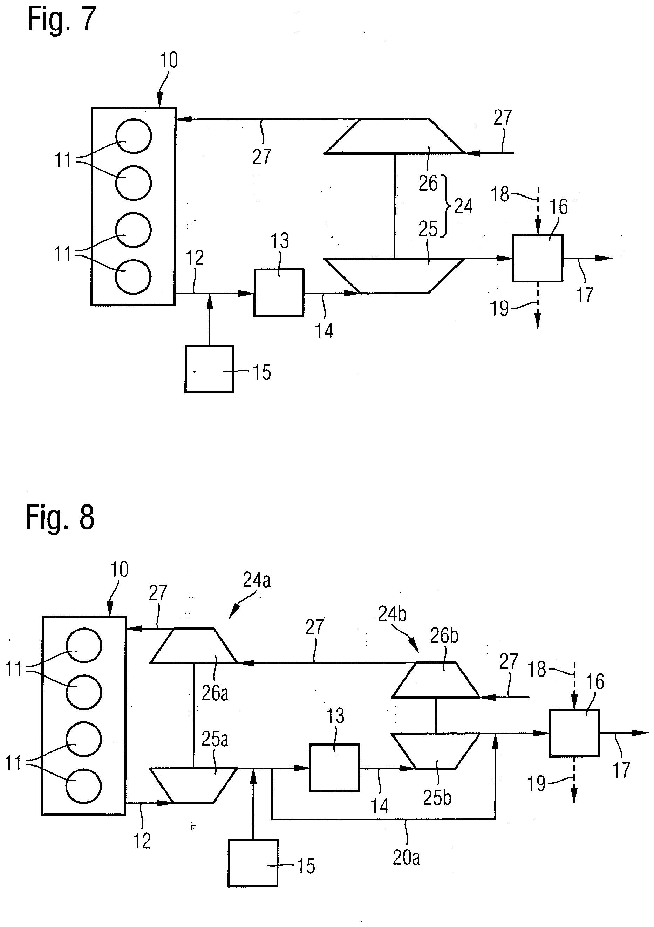

Fig. 7 und 8 zeigen zwei Ausführungsbeispiele der Erfindung, bei welchen die Variante der Fig. 1 bei einer abgasaufgeladenen Brennkraftmaschine zum Einsatz kommt. So zeigt Fig. 7 eine Brennkraftmaschine 10 mit einer einstufigen Abgasaufladung über einen einzigen Abgasturbolader 24, wobei vom Abgasturbolader 24 eine Turbine 25 und ein Verdichter 26 gezeigt sind. In Fig. 7 ist der SCR-Katalysator 13 samt der Einrichtung 15, die dem Zudosieren des Ammoniaks und/oder der Ammoniakvorläufersubstanz in das Abgas 12 dient, stromaufwärts der Turbine 25 des Abgasturboladers 24 angeordnet, der Abgaswäscher 16 ist jedoch stromabwärts der Turbine 25 des Abgasturboladers 24 positioniert. Durch die hohen Drücke und Temperaturen stromaufwärts der Turbine 25 wird die Entstickung des Abgases im Bereich des SCR-Katalysators 13 unterstützt. In der Turbine 25 bei der Entspannung des entstickten Abgases 14 gewonnene Energie wird genutzt, um im Bereich des Verdichters 26 des Abgasturboladers 24 dem Verbrennungsmotor 10 zuzuführende Ladeluft 27 zu verdichten.

Fig. 8 zeigt eine Variante einer Brennkraftmaschine 10 mit einer zweistufigen Abgasaufladung, die demnach zwei Abgasturbolader 24a, 24b umfasst. Beim Abgasturbolader 24a handelt es sich um einen Hochdruckabgasturbolader und beim Abgasturbolader 24b um einen Niederdruckabgasturbolader. In Fig. 8 sind der SCR-Katalysator 13 und die Einrichtung 15 zum Einbringen des Ammoniaks bzw. der Ammoniakvorläufersubstanz in das Abgas 12 stromabwärts der Hochdruckturbine 25a des Hochdruckturboladers 24a und stromaufwärts der Niederdruckturbine 25b des Niederdruckturboladers 24b angeordnet, wohingegen der Abgaswäscher 16 stromabwärts der Niederdruckturbine 25b des Niederdruckturboladers 24b angeordnet ist. In den Abgasturboladern 24a, 24b bei der Entspannung des Abgases im Bereich der Turbinen 25a, 25b gewonnene Energie wird genutzt, um dem Verbrennungsmotor 10 zuzuführende Ladeluft 27 zweistufig zu verdichten, nämlich im Bereich des Niederdruckverdichters 26b sowie des Hochdruckverdichters 26a von Niederdruckabgasturbolader 24b und Hochdruckturbolader 24a.

Es sei an dieser Stelle darauf hingewiesen, dass auch die Varianten der Fig. 2 bis 6 jeweils in Kombination mit einer einstufig oder auch zweistufig aufgeladenen Brennkraftmaschine 10 genutzt werden können. Dabei sind dann in Übereinstimmung zu den Ausführungsbeispielen der Fig. 7 und 8 die SCR-Katalysatoren 13 und ggf. 21 inklusive der Bypässe 20, 22 stromaufwärts einer Turbine 25 bzw. 25b eines Abgasturboladers 24 bzw. 24b positioniert, wohingegen die Abgaswäscher 16 stromabwärts der jeweiligen Turbine 25, 25b des jeweiligen Abgasturboladers 24, 24b positioniert sind.

In den Ausführungsbeispielen der Fig. 1 bis 8 wird das Ammoniak bzw. die Ammoniakvorläufersubstanz über die Einrichtung 15 derart in das Abgas eingebracht, dass über den Eintrittsquerschnitt des oder jedes SCR-Katalysators 13 bzw. 21 eine gleichförmige Ammoniakkonzentration eingestellt wird.

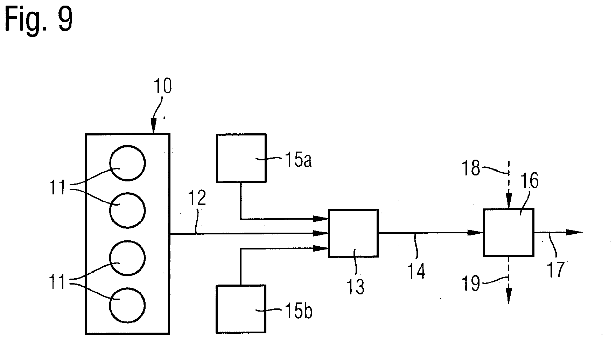

Im Unterschied hierzu zeigt Fig. 9 eine Weiterbildung des Ausführungsbeispiels der Fig. 1, in welcher über den Eintrittsquerschnitt des SCR-Katalysators 13 unterschiedliche Ammoniakkonzentrationen eingestellt werden. So sind in Fig. 9 zwei Einrichtungen 15a, 15b gezeigt, die jeweils dem Einbringen von Ammoniak bzw. einer Ammoniakvorläufersubstanz stromaufwärts des SCR-Katalysators 13 in das die Brennkraftmaschine 10 verlassende Abgas 12 dienen, und zwar derart, dass sich über den Eintrittsquerschnitt des SCR-Katalysators eine unterschiedliche Ammoniakkonzentration einstellt. Dies kann zum Beispiel dadurch gewährleistet werden, dass die beiden Einrichtungen 15a, 15b das Ammoniak bzw. die Ammoniakvorläufersubstanz mit einem unterschiedlichen Massenstrom, wie in Fig. 9 gezeigt, unmittelbar im Eintrittsbereich des SCR-Katalysators 13 in das Abgas 12 einbringen. Dabei erfolgt die Einstellung einer über den Eintrittsquerschnitt des SCR-Katalysators 13 unterschiedlichen Ammoniakonzentration vorzugsweise derart, dass stromabwärts des SCR-Katalysators 13 in dem denselben verlassenden Abgas 14 und demnach stromaufwärts des Abgaswäschers 16 ein Gleichverteilungsindex des Ammoniaks unter 0,8, bevorzugt unter 0,7, besonders bevorzugt unter 0,6, liegt.

Der Gleichverteilungsindex von Ammoniak stromaufwärts des SCR-Katalysators kann dabei nach folgenden Formeln bestimmt werden:

$$\gamma = 1 - 0.5 * \overline{\omega}$$

$$\overline{\omega} = \frac{1}{n} * \sum_{i=1}^{n} \omega_i$$

$$\omega_i = \frac{1}{\overline{c}} * \sqrt{(c_i - \overline{c})^2}$$

$$\overline{c} = \frac{1}{n} * \sum_{i=1}^{n} c_i$$

wobei $\gamma$ der Gleichverteilungsindex des Ammoniaks stromabwärts des SCR-Katalysators 13 ist, wobei $c_i$ die Ammoniakkonzentration am i-ten Messpunkt stromaufwärts des SCR-Katalysators 13 ist, und wobei n die Gesamtanzahl der Messpunkte stromabwärts des SCR-Katalysators 13 ist.

Es liegt demnach im Sinne der hier vorliegenden Erfindung, zur Abgasreinigung von Abgas einer Brennkraftmaschine 10, insbesondere einer mit Schweröl betriebenen Brennkraftmaschine, zur Entstickung und Entschwefelung jeweils Ammoniak zu nutzen, wobei die Entstickung in einem SCR-Katalysator 13 und die Entschwefelung stromabwärts hiervon in einem Abgaswäscher 16 erfolgt. Dabei wird der SCR-Katalysator 13 mit Ammoniaküberschuss betrieben, sodass stromabwärts des SCR-Katalysators 13 und stromaufwärts des Abgaswäschers 16 eine definierte Ammoniakmenge vorliegt, die zur Entschwefelung im Abgaswäscher 16 genutzt werden kann.

Bezugszeichenliste

| 10 | Brennkraftmaschine |
| 11 | Zylinder |
| 12 | Abgas |
| 12a | Abgashauptstrom |
| 12b | Abgasteilstrom |
| 12b1 | erster Teil des Abgasteilstroms |
| 12b2 | zweiter Teil des Abgasteilstroms |
| 13 | SCR-Katalysator |
| 14 | Abgas |
| 15 | Einrichtung |
| 15a | Einrichtung |
| 15b | Einrichtung |
| 16 | Abgaswäscher |
| 17 | Abgas |
| 18 | Wasser |
| 19 | Abwasser |
| 20, 20a | Bypass |
| 21 | SCR-Katalysator |
| 22 | Bypass |
| 23 | Hydrolysekatalysator |
| 24 | Abgasturbolader |
| 24a | Hochdruckabgasturbolader |
| 24b | Niederdruckabgasturbolader |
| 25 | Turbine |
| 25a | Hochdruckturbine |
| 25b | Niederdruckturbine |
| 26 | Verdichter |
| 26a | Hochdruckverdichter |
| 26b | Niederdruckverdichter |
| 27 | Ladeluft |

**Patentansprüche**

1. Abgasnachbehandlungssystem für eine Brennkraftmaschine, insbesondere für eine mit Schweröl betriebene Schiffsdieselbrennkraftmaschine, mit einem SCR-Katalysator (13), welcher zur Entstickung des Abgases als Reduktionsmittel Ammoniak nutzt, und mit einer in Strömungsrichtung des Abgases gesehen stromaufwärts des SCR-Katalysators (13) positionierten Einrichtung (15, 15a, 15b), über die Ammoniak und/oder eine Ammoniakvorläufersubstanz, die im Abgas zu Ammoniak umgesetzt wird, in das Abgas stromaufwärts des SCR-Katalysators (13) einbringbar ist, wobei stromabwärts des SCR-Katalysators (13) ein Abgaswäscher (16) positioniert ist, über welchen eine stromaufwärts des SCR-Katalysators (13) eingebrachte definierte Menge an Ammoniak, welche in dem den SCR-Katalysator (13) verlassenden Abgas enthalten ist, zusammen mit Schwefeloxiden, welche ebenfalls in dem den SCR-Katalysator (13) verlassenden Abgas enthalten sind, unter Bildung von Ammoniumsalzen aus dem Abgas auswaschbar ist, **dadurch gekennzeichnet dass** ein Bypass (20, 20a) vorgesehen ist, über welchen ein Abgasteilstrom (12b) stromabwärts der Einrichtung (15, 15a, 16), die dem Einbringen des Ammoniaks und/oder der Ammoniakvorläufersubstanz in das Abgas dient, und stromaufwärts des SCR-Katalysators (13) vom Abgas unter Ausbildung eines Abgashauptstroms (12a), der über den SCR-Katalysator (13) führbar ist, abzweigbar und abschließend stromabwärts des SCR-Katalysators (13) und stromaufwärts des Abgaswäschers (16) dem über den SCR-Katalysator geführten Abgas (14) zuführbar ist, **oder** ein Bypass (22) vorgesehen ist, über welchen ein Abgasteilstrom (12b) stromaufwärts der Einrichtung (15), die dem Einbringen des Ammoniaks und/oder der Ammoniakvorläufersubstanz in das Abgas dient, und stromaufwärts des SCR-Katalysators (13) vom Abgas unter Ausbildung eines Abgashauptstroms (12a), der über den SCR-Katalysator (13) führbar ist, abzweigbar ist, wobei die Einrichtung (15, 15a, 15b), die dem Einbringen des Ammoniaks und/oder der Ammoniakvorläufersubstanz in das Abgas dient, dem Bypass (22) zugeordnet ist und des Ammoniak und/oder die Ammoniakvorläufersubstanz in den Abgasteilstrom (12b) einbringt, und wobei ein erster Teil (12b2) des Abgasteilstroms (12b) stromaufwärts des SCR-Katalysators (13) dem Abgashauptstrom und ein zweiter Teil (12b1) des Abgasteilstroms (12b) stromabwärts des SCR-Katalysators (13) und stromaufwärts des Abgaswäschers (16) dem über den SCR-Katalysator geführten Abgas (14) zuführbar ist.

2. Abgasnachbehandlungssystem nach Anspruch 1, **dadurch gekennzeichnet, dass** die stromaufwärts des SCR-Katalysators (13) positionierte Einrichtung (15, 15a, 15b) das Ammoniak und/oder die Ammoniakvorläufersubstanz in einer Menge in das Abgas einbringt, die größer als die im SCR-Katalysator (13) umsetzbare Ammoniakmenge ist, sodass stromabwärts des SCR-Katalysators Ammoniak in einer Menge enthalten ist, dass ein pH-Wert des Abwassers des Abgaswäschers (16) zwischen 4 und 8 liegt.

3. Abgasnachbehandlungssystem nach Anspruch 2, **dadurch gekennzeichnet, dass** die Einrichtung (15, 15a, 15b) das Ammoniak und/oder die Ammoniakvorläufersubstanz in einer Menge in das Abgas einbringt, sodass der pH-Wert des Abwassers zwischen 5 und 7, vorzugsweise zwischen 5,5 und 6,5, liegt.

4. Abgasnachbehandlungssystem nach Anspruch 1, **dadurch gekennzeichnet, dass** in dem Bypass (20, 20a, 22) ein weiterer SCR-Katalysator (21) angeordnet ist, über welchen der stromabwärts des SCR-Katalysators (13) und stromaufwärts des Abgaswäschers (16) dem Abgas (14) zugeführte Abgasteilstrom (12b) oder Teil (12b1) desselben leitbar ist.

5. Abgasnachbehandlungssystem nach einem der Ansprüche 1 bis 4, **gekennzeichnet durch** eine Turbine (25, 25b) eines Abgasturboladers, wobei die Einrichtung (15, 15a, 15b) zum Einbringen des Ammoniaks und/oder der Ammoniakvorläufersubstanz in das Abgas und vorzugsweise auch der SCR-Katalysator (13) stromaufwärts der Turbine (25, 25b) des Abgasturboladers und der Abgaswäscher (16) stromabwärts der Turbine (25, 25b) des Abgasturboladers positioniert sind.

6. Abgasnachbehandlungssystem nach einem der Ansprüche 1, 4 oder 5, **dadurch gekennzeichnet, dass** der Bypass (20a) gleichzeitig als Turbolader-Waste-Gate dient.

**Claims**

1. An exhaust gas aftertreatment system for an internal combustion engine, in particular for a diesel internal combustion engine for a ship operated with heavy fuel oil, with an SCR catalytic converter (13), which utilises ammonia as reduction agent for the denitrification of the exhaust gas, and with a device (15, 15a, 15b) positioned, seen in the flow direction of the exhaust gas, upstream of the SCR catalytic converter (13), via which ammonia, or an ammonia precursor substance, which is converted into ammonia in the exhaust gas, can be introduced into the exhaust gas upstream of the SCR catalytic converter (13), wherein downstream of the SCR catalytic converter (13) an exhaust gas scrubber (16) is positioned, via which a defined quantity of ammonia introduced upstream of the SCR catalytic converter (13), which is contained in the exhaust gas leaving the SCR catalytic converter (13), can be scrubbed out of the exhaust gas together with sulphur oxides, which are likewise contained in the exhaust gas leaving the SCR catalytic converter (13) forming ammonia salts, **characterized in that** a bypass (20, 20a) is provided, via which an exhaust gas part flow (12b) can be branched off downstream of the device (15, 15a, 16), which serves for introducing the ammonia and/or the ammonia precursor substance into the exhaust gas, and upstream of the SCR catalytic converter (13) can be branched off from the exhaust gas forming an exhaust gas main flow (12a), which can be conducted via the SCR catalytic converter (13), and finally downstream of the SCR catalytic converter (13) and upstream of the exhaust gas scrubber (16) can be fed to the exhaust gas (14) conducted via the SCR catalytic converter, or a bypass is provided, via which an exhaust gas part flow (12b) upstream of the device (15), which serves for introducing the ammonia and/or the ammonia precursor substance into the exhaust gas, and upstream of the SCR catalytic converter (13) can be branched off the exhaust gas forming an exhaust gas main flow (12a), which can be conducted via the SCR catalytic converter (13), wherein the device (15, 15a, 15b), which serves for introducing the ammonia and/or the ammonia precursor substance into the exhaust gas, is assigned to the bypass (22) and introduces the ammonia and/or the ammonia precursor substance into the exhaust gas part flow (12b), and wherein a first part (12b2) of the exhaust gas part flow (12b) of the SCR catalytic converter (13) can be fed to the exhaust gas main flow and a second part (12b1) of the exhaust gas part flow (12b) downstream of the SCR catalytic converter (13) and upstream of the exhaust gas scrubber (16) can be fed to the exhaust gas (14) conducted via the SCR catalytic converter.

**2.** The exhaust gas aftertreatment system according to claim 1, **characterized in that** the device (15, 15a, 15b) positioned upstream of the SCR catalytic converter (13) which introduces the ammonia and/or the ammonia precursor substance into the exhaust gas in a quantity that is greater than the ammonia quantity that can be converted in the SCR catalytic converter (13), so that downstream of the SCR catalytic converter ammonia is contained in a quantity so that a pH value of the waste water of the exhaust gas scrubber (16) is between 4 and 8.

**3.** The exhaust gas aftertreatment system according to claim 2, **characterized in that** the device (15, 15a, 15b) introduces the ammonia and/or the ammonia precursor substance into the exhaust gas in a quantity so that the pH value of the waste water is between 5 and 7, preferentially between 5.5 and 6.5.

**4.** The exhaust gas aftertreatment system according to claim 1, **characterized in that** in the bypass (20, 20a, 22) a further SCR catalytic converter (21) is arranged, via which the exhaust gas part flow (12b) or part (12b1) of the same fed to the exhaust gas (14) downstream of the SCR catalytic converter (13) and upstream of the exhaust gas scrubber (16) can be conducted.

**5.** The exhaust gas aftertreatment system according to any one of the claims 1 to 4, **characterized by** a turbine (25, 25b) of an exhaust gas turbocharger, wherein the device (15, 15a, 15b) for introducing the ammonia and/or the ammonia precursor substance into the exhaust gas and preferentially also the SCR catalytic converter (13) are positioned upstream of the turbine (25, 25b) of the exhaust gas turbocharger and the exhaust gas scrubber (16) downstream of the turbine (25, 25b) of the exhaust gas turbocharger.

**6.** The exhaust gas aftertreatment system according to any one of the claims 1, 4 or 5, **characterized in that** the bypass (20a) simultaneously serves as turbocharger waste gate.

**Revendications**

**1.** Système de post-traitement pour un moteur à combustion interne, notamment pour un moteur à combustion interne diesel de navire fonctionnant au fioul lourd, avec un catalyseur SCR (13), qui utilise de l'ammoniaque comme moyen de réduction pour la dénitration du gaz d'échappement et comportant un dispositif (15, 15a, 15b) positionné en amont vu dans la direction d'écoulement du gaz d'échappement du catalyseur SCR (13), par l'intermédiaire duquel de l'ammoniaque et/ou un précurseur d'ammoniaque, qui est converti dans le gaz d'échappement en ammoniaque, peut être introduit dans le gaz d'échappement en amont du catalyseur SCR (13), dans lequel en aval du catalyseur SCR (13) un dispositif de lavage de gaz d'échappement (16) est positionné, par l'intermédiaire duquel une quantité d'ammoniaque définie appliquée en amont du catalyseur SCR (13), qui est contenue dans le gaz d'échappement quittant le catalyseur SCR (13), peut être lavée conjointement à des oxydes de soufre, qui sont également contenus dans le gaz d'échappement quittant le catalyseur SCR (13), en formant des sels d'ammonium à partir des gaz d'échappement, **caractérisé en ce que** une dérivation (20, 20a) est prévue, par l'intermédiaire de laquelle un courant partiel de gaz d'échappement (12b) en aval du dispositif (15, 15a, 16), qui sert à introduire l'ammoniaque et/ou le précurseur d'ammoniaque dans les gaz d'échappement, et en amont du catalyseur SCR (13) peut être dérivé des gaz d'échappement en formant un courant principal de gaz d'échappement (12a), qui peut être guidé par l'intermédiaire du catalyseur SCR (13), et peut ensuite être alimenté en aval du catalyseur SCR (13) et en amont du dispositif de lavage de gaz d'échappement (16) dans le gaz d'échappement (14) guidé à travers le catalyseur SCR, ou une dérivation (22) est prévue, par l'intermédiaire de laquelle un courant partiel de gaz d'échappement (12b) peut être dévié en amont du dispositif (15), qui sert à introduire l'ammoniaque et/ou le précurseur d'ammoniaque dans les gaz d'échappement, et en amont du catalyseur SCR (13), des gaz d'échappement en formant un courant principal de gaz d'échappement (12a), qui peut être guidé à travers le catalyseur SCR (13), dans lequel le dispositif (15, 15a, 15b), qui sert à introduire l'ammoniaque et/ou le précurseur d'ammoniaque dans les gaz d'échappement, est coordonné à la dérivation (22) et introduit l'ammoniaque et/ou le précurseur d'ammoniaque dans le courant partiel de gaz d'échappement (12b), et dans lequel une première partie (12b2) du courant partiel de gaz d'échappement (12b) en amont du catalyseur SCR (13) peut être alimentée dans le courant principal de gaz d'échappement et une deuxième partie (12b1) du courant partiel de gaz d'échappement (12b) en aval du catalyseur SCR (13) et en amont du dispositif de lavage des gaz d'échappement (16) peut être alimentée dans les gaz d'échappement (14) guidés à travers le catalyseur SCR.

2. Système de post-traitement des gaz d'échappement selon la revendication 1, **caractérisé en ce que** le dispositif (15, 15a, 15b) positionné en amont du catalyseur SCR (13) introduit l'ammoniaque et/ou le précurseur d'ammoniaque dans les gaz d'échappement en une quantité, qui est plus grande que la quantité d'ammoniaque pouvant être convertie dans le catalyseur SCR (13), de sorte qu'en aval du catalyseur SCR de l'ammoniaque soit contenu dans une quantité, qui correspond à une valeur de pH des eaux usées du dispositif de lavage des gaz d'échappement (16) comprise entre 4 et 8.

3. Système de post-traitement des gaz d'échappement selon la revendication 2, **caractérisé en ce que** le dispositif (15, 15a, 15b) introduit l'ammoniaque et/ou le précurseur d'ammoniaque dans les gaz d'échappement dans une quantité telle que la valeur de pH des eaux usées soit comprise entre 5 et 7, de préférence entre 5,5 et 6,5.

4. Système de post-traitement des gaz d'échappement selon la revendication 1, **caractérisé en ce que** dans la dérivation (20, 20a, 20b) un catalyseur SCR supplémentaire (21) est disposé, par l'intermédiaire duquel le courant partiel de gaz d'échappement (12b) ou une partie (12b1) alimenté dans le gaz d'échappement (14) peut être guidé en aval du catalyseur SCR (13) et en amont du dispositif de lavage de gaz d'échappement (16).

5. Système de post-traitement des gaz d'échappement selon une des revendications 1 à 4, **caractérisé par** une turbine (25, 25b) d'un turbocompresseur de gaz d'échappement, dans lequel le dispositif (15, 15a, 15b) pour introduire l'ammoniaque et/ou le précurseur d'ammoniaque dans les gaz d'échappement et de préférence également dans le catalyseur SCR (13) en amont de la turbine (25, 25b) du turbocompresseur de gaz d'échappement et dans le dispositif de lavage de gaz d'échappement (16) en aval de la turbine (25, 25b) du turbocompresseur de gaz d'échappement.

6. Système de post-traitement des gaz d'échappement selon une des revendications 1, 4 ou 5, **caractérisé en ce que** la dérivation (20a) sert simultanément de limiteur de pression de suralimentation de turbocompresseur.

**Fig. 1**

**Fig. 2**

## Fig. 3

## Fig. 4

Fig. 5

Fig. 6

Fig. 7

Fig. 8

Fig. 9

**IN DER BESCHREIBUNG AUFGEFÜHRTE DOKUMENTE**

**In der Beschreibung aufgeführte Patentdokumente**

- WO 2012130375 A
- WO 2010020684 A
- WO 2013121081 A
- DE 102004027593 A1
- WO 2012130375 A1